# EUROPÄISCHE PATENTSCHRIFT

(11) **EP 3 836 567 B1**
(45) Veröffentlichungstag und Bekanntmachung des Hinweises auf die Patenterteilung: **28.12.2022**
(21) Anmeldenummer: 20209873.7
(22) Anmeldetag: 25.11.2020
(51) Int. Cl.: H04R 25/00

(54) **VERFAHREN ZUM BETRIEB EINES HÖRSYSTEMS UND HÖRSYSTEM**
HEARING DEVICE AND METHOD FOR OPERATING A HEARING DEVICE
PROCÉDÉ DE FONCTIONNEMENT D'UN SYSTÈME AUDITIF ET SYSTÈME AUDITIF

(30) Priorität: 13.12.2019 DE 102019219567
(43) Veröffentlichungstag der Anmeldung: 16.06.2021
(73) Patentinhaber: Sivantos Pte. Ltd., Singapore 539775 (SG)
(72) Erfinder: HEMPEL, Thomas, 91052 Erlangen (DE)
(74) Vertreter: FDST Patentanwälte

(56) Entgegenhaltungen:
- JP-A- 2019 185 077
- US-A1- 2013 144 623

## Beschreibung

Die Erfindung betrifft ein Verfahren zum Betrieb eines ein Hörhilfegerät sowie ein Mobilgerät umfassenden Hörsystems. Des Weiteren betrifft die Erfindung ein solches Hörsystem.

Hörgeräte dienen im Allgemeinen zur Wiedergabe von Tonsignalen an das Gehör eines Nutzers des jeweiligen Hörgeräts. Dazu umfassen Hörgeräte zumindest einen Ausgabewandler, üblicherweise ein Lautsprecher (auch: "Receiver"). In Form von sogenannten Hörhilfegeräten dienen Hörgeräte zur Versorgung von in ihrem Hörvermögen verminderten Personen mit Tonsignalen. Regelmäßig umfassen Hörhilfegeräte dazu wenigstens ein Mikrofon, einen Signalprozessor zur meist nutzerspezifischen, frequenzabhängigen Filterung, Verstärkung und/oder Dämpfung von mittels des Mikrofons erfassten Geräuschen, sowie den vorgenannten Ausgabewandler. Je nach Art der Hörminderung kann der Ausgabewandler neben dem vorstehend beschriebenen Lautsprecher auch als Knochenleitungshörer oder Cochlea-Implantat zur mechanischen bzw. elektrischen Stimulation des Gehörs des Nutzers ausgebildet sein. Neben den Hörhilfegeräten fallen aber grundsätzlich auch Kopfhörer, Headsets, "hearables" und dergleichen und den Begriff "Hörgerät".

Unter anderem aus EP 1 912 474 B1, EP 3 337 187 A1, DE 10 2008 040 002 A1, DE 10 2015 212 609 A1, WO 2013/189551 A1 und JP 2000 125 397 A2 ist es bekannt, Sprachanteile und dabei konkret Stimmen von einem oder sogar unterschiedlichen Sprechern in den erfassten Tonsignalen (wieder) zu erkennen. Ein Ziel ist dabei, einen Sprecher, der sich relativ zu einem Hörgeräteträger bewegt, vorzugsweise mit einer "Richtkeule" der Mikrofone des Hörgeräts zu "verfolgen".

Des Weiteren hat diese Stimmerkennung bspw. auch den Vorteil, dass die Signalverarbeitung des Signalprozessors auf die Eigenschaften der Stimme des Sprechers angepasst werden kann. US 2013/0144623 A1 beschreibt Verfahren zur Verbesserung von Fähigkeiten. Einige Ausführungsformen stellen ein System zur Verbesserung der Fähigkeiten ("AEFS") bereit, das so konfiguriert ist, dass es sprecherbezogene Informationen auf der Grundlage von Sprecheräußerungen bestimmt und präsentiert. In einer Ausführungsform empfängt das AEFS Daten, die eine Äußerung eines Sprechers repräsentieren, die von einem Hörgerät des Benutzers empfangen wird, wie z. B. einem Hörgerät, einem Smartphone, einem Mediaplayer/-gerät oder dergleichen. Das AEFS identifiziert den Sprecher auf der Grundlage der empfangenen Daten, z. B. durch Durchführung einer Sprechererkennung. Das AEFS ermittelt sprecherbezogene Informationen, die mit dem identifizierten Sprecher verbunden sind, z. B. durch Bestimmung einer Kennung (z. B. Name oder Titel) des Sprechers, durch Auffinden eines Informationselements (z. B. eine E-Mail-Nachricht, ein Dokument), das mit dem Sprecher verbunden ist, oder Ähnliches. Das AEFS informiert dann den Benutzer über die sprecherbezogenen Informationen, z. B. indem es die sprecherbezogenen Informationen auf einem Display des Hörgeräts oder einem anderen für den Benutzer zugänglichen Gerät anzeigt.

Der Erfindung liegt die Aufgabe zugrunde, einen Nutzungskomfort eines Hörgeräts weiter zu verbessern.

Diese Aufgabe wird erfindungsgemäß gelöst durch ein Verfahren mit den Merkmalen des Anspruchs 1 sowie durch ein Hörsystem mit den Merkmalen des Anspruchs 9. Vorteilhafte und teils für sich erfinderische Ausführungsformen und Weiterentwicklungen der Erfindung sind in den Unteransprüchen und der nachfolgenden Beschreibung dargelegt.

Das erfindungsgemäße Verfahren dient zum Betrieb eines (wenigstens) ein Hörhilfegerät (zumindest bei monauraler Versorgung, bei binauraler Versorgung vorzugsweise zwei Hörhilfegeräte) sowie ein Mobilgerät umfassenden Hörsystems. Verfahrensgemäß werden dabei mittels wenigstens eines Mikrofons des Hörhilfegeräts Schallsignale erfasst und in zugeordnete elektrische Mikrofonsignale gewandelt. Diese Mikrofonsignale werden dann auf ein Vorhandensein von Sprachanteilen überprüft sowie gegebenenfalls erkannte, d. h. vorhandene Sprachanteile mittels einer Stimmerkennung untersucht. Ein dabei erkanntes Stimmprofil (das vorzugsweise einem erkannten Sprachanteil zugeordnet ist oder wird und das den entsprechenden Sprachanteil charakterisiert, insbesondere von anderen Sprachanteilen unterscheidet) wird anschließend einem spezifischen Sprecher zugeordnet. Mittels des Mobilgeräts werden anschließend über eine Personeninformation hinausgehende Zusatzinformationen zu dem spezifischen Sprecher eingeholt und einem Nutzer des Hörsystems (insbesondere dem "Hörgeräteträger") dargeboten.

In einer bevorzugten Variante wird als Mobilgerät bspw. ein Mobiltelefon, insbesondere ein Smartphone, ein Tablet, eine "Smartwatch" oder ein vergleichbares Gerät herangezogen. Die Zusatzinformation wird dabei vorzugsweise aus einer Kontaktdatenbank, bspw. einer "Adressbuchapplikation", die auf dem Mobilgerät lokal installiert ist, oder die online hinterlegt ist und von einer entsprechenden Applikation auf dem Mobilgerät verwaltet wird, abgerufen.

In einer zweckmäßigen Verfahrensvariante wird in dem Mobilgerät (des Hörsystems und somit des Hörgeräteträgers) zu dem spezifischen Sprecher eine Gesprächs-Historie über bereits erfolgte Gespräche mit diesem spezifischen Sprecher geführt. Dem Nutzer des Hörsystems (d. h. dem Hörgeräteträger) wird in diesem Fall bei Erkennen des spezifischen Sprechers (insbesondere anhand des entsprechend zugeordneten Stimmprofils) als Zusatzinformation ein aktueller Stand der Gesprächs-Historie ausgegeben. Mit anderen Worten wird der Hörgeräteträger bei Erkennen der Stimme des spezifischen Sprechers - bspw. mittels eines Displays des Mobilgeräts und/oder akustisch über einen Lautsprecher des Hörhilfegeräts - darüber informiert, wie oft er sich - insbesondere innerhalb eines vergangenen, eingegrenzten Zeitraums von vorzugsweise mehreren Tagen, insbesondere etwa einer Woche - mit dieser spezifischen Person unterhalten hat. Optional wird insbesondere für den Fall, dass das letzte Gespräch weiter zurückliegt als sich der eingegrenzte Zeitraum erstreckt, nur das Datum des letzten Gesprächs ausgegeben. Bspw. wird also ausgegeben, dass sich der Hörgeräteträger mit dem spezifischen Sprecher in der vergangenen Woche vier Mal unterhalten hat, oder dass das letzte Gespräch vor mehreren Wochen am (lediglich beispielhaft) 29.05. 2019 stattgefunden hat.

In einer weiteren zweckmäßigen Verfahrensvariante wird - zusätzlich oder alternativ zu der vorstehenden Zusatzinformation - als (gegebenenfalls weitere) Zusatzinformation eine Termininformation, die mit dem spezifischen Sprecher verknüpft ist, ausgegeben.

Vorzugsweise wird hierzu diese Termininformation aus einer mittels des Mobilgeräts verwalteten Datenbank, bspw. eine Kalenderapplikation oder dergleichen, abgerufen. Bspw. enthält diese Termininformation einen Geburtstag (ist bspw. dahingehend formuliert, dass der spezifische Sprecher vor wenigen Tagen oder in einigen Tagen Geburtstag hat), ein bevorstehendes Treffen (bspw. eine mit dem spezifischen Sprecher vereinbarte Einladung) oder dergleichen.

In einer weiteren (zusätzlichen oder alternativen) zweckmäßigen Verfahrensvariante wird überprüft, ob zu dem spezifischen Sprecher eine Spracheninformation zu einer von diesem vornehmlich (oder auch ausschließlich) gesprochenen Fremdsprache vorliegt. Anders ausgedrückt wird geprüft, ob der spezifische Sprecher fremdsprachig ist. Vorzugsweise erfolgt dies auch über eine mittels des Mobilgeräts beschaffte Zusatzinformation, bspw. für den Fall, dass in der vorstehend genannten Kontaktdatenbank eine Nationalität oder sogar die (einzig) gesprochene Sprache hinterlegt ist. Zusätzlich oder alternativ wird über eine Spracherkennung aus den gesprochenen Worten die aktuell verwendete Sprache des spezifischen Sprechers ermittelt. Für den Fall, dass als zugeordnete Spracheninformation hinterlegt ist, dass der spezifische Sprecher vornehmlich oder sogar nur eine Fremdsprache spricht (und/oder gegebenenfalls aktuell diese Fremdsprache verwendet), wird dem Hörgeräteträger eine Übersetzung der von dem spezifischen Sprecher (insbesondere aktuell) gesprochenen Worte dargeboten. Beispielsweise wird hierzu eine vorzugsweise auf dem Mobilgerät installierte Diktiersoftware sowie eine (installierte oder online verfügbare) Übersetzungssoftware genutzt. Die Darbietung der Übersetzung erfolgt dabei optional in Form einer Anzeige auf dem vorstehend genannten Display des Mobilgeräts und/oder per akustischer Ausgabe mittels des Lautsprechers des Hörhilfegeräts - d. h. nach Art einer Simultanübersetzung.

In einer zweckmäßigen Verfahrensvariante wird dem Hörgeräteträger bei erfolgloser Stimmerkennung eine Anfrage zur Zuweisung eines in den Sprachanteilen enthaltenen, unbekannten Stimmprofils zu einer spezifischen Person gestellt. Dies ist regelmäßig dann der Fall, wenn sich der Hörgeräteträger mit einer Person unterhält, deren Stimmprofil bisher noch nicht einem Kontakt aus der vorstehend genannten Kontaktdatenbank zugewiesen war oder die bisher dem Hörgeräteträger auch unbekannt war. Die Anfrage zu Zuweisung des Stimmprofils wird dabei optisch auf dem Display des Mobilgeräts und/oder akustisch via das Hörhilfegerät gestellt. Die Eingabe durch den Hörgeräteträger erfolgt dabei bevorzugt über das Mobilgerät.

In einer weiteren zweckmäßigen Verfahrensvariante wird dem Hörgeräteträger (auch) bei erkanntem Stimmprofil eine Anfrage zur Bestätigung der spezifischen Person gestellt. Bspw. wird dem Hörgeräteträger hierbei die Frage - optisch und/oder akustisch - gestellt, ob es sich bei dem Sprecher (tatsächlich) um eine bestimmte, konkret die anhand des Sprachanteils, insbesondere des Stimmprofils erkannte, Person handelt. Zweckmäßigerweise wird für den Sprachanteil im Rahmen des hier und im Folgenden beschriebenen Verfahrens ein Wahrscheinlichkeitswert dafür ermittelt, dass das den Sprachanteil charakterisierende Stimmprofil bekannt und einem spezifischen Sprecher zugeordnet ist. In diesem Fall ist das Einholen einer Bestätigung insbesondere dann vorteilhaft, wenn der Wahrscheinlichkeitswert aufgrund bspw. lauter Zusatz- oder Umgebungsgeräusche vergleichsweise gering ausfällt.

In einer vorteilhaften Verfahrensvariante wird während einer Lernphase, die für den jeweiligen spezifischen Sprecher durchgeführt wird, dessen Stimmprofil in unterschiedlichen akustischen Umgebungen erfasst. Vorzugsweise wird bei erstmaliger Erkennung des Stimmprofils und Zuordnung eines spezifischen Sprechers (insbesondere also eines Kontakts zu dem Stimmprofil) eine solche Lernphase gestartet, die sich optional über mehrere, zeitlich voneinander getrennte Gespräche erstreckt. Dadurch ist die Wahrscheinlichkeit vergleichsweise hoch, dass diese Gespräche in unterschiedlichen Umgebungsbedingungen erfolgen, bspw. als Telefonat, Gespräch in einem Raum zu zweit, im Freien mit mehreren anderen Personen oder dergleichen. Während dieser Gespräche wird das Stimmprofil wiederholt überarbeitet - bspw. signifikante Unterschiede, die zu einer Fehlidentifikation führen könnten, durch Mittelung geglättet oder dergleichen -, so dass eine Erkennung in vielen unterschiedlichen Umgebungssituationen mit hoher Wahrscheinlichkeit erfolgreich durchgeführt werden kann. Bspw. wird hierzu ein selbstlernender Algorithmus eingesetzt. Vorzugsweise wird diese Lernphase von dem Mobilgerät, vorzugsweise dem Smartphone durchgeführt, auf dem dann auch vorzugsweise eine entsprechende Softwareapplikation installiert ist.

Zusätzlich wird bei Erkennen des Stimmprofils und somit auch des spezifischen Sprechers dem Hörgeräteträger insbesondere auch ein, vorzugsweise in der Kontaktdatenbank hinterlegtes Bild des spezifischen Sprechers, bspw. zusammen mit der Anfrage zur Bestätigung, dass es sich tatsächlich um diesen Sprecher handelt, angezeigt.

In einer weiteren zweckmäßigen Verfahrensvariante wird - bei Erkennen des Stimmprofils und somit auch des spezifischen Sprechers - im Hörhilfegerät eine von dem spezifischen Sprecher abhängige, insbesondere stimmprofilabhängige Signalverarbeitung aufgenommen. Optional werden dabei bspw. bekanntermaßen in dem Stimmprofil nur schwach wiedergegebene Frequenzen angehoben, gegebenenfalls auch bekannte Sprachfehler des spezifischen Sprechers korrigiert oder zumindest abgemildert.

Das erfindungsgemäße Hörsystem umfasst das vorstehend beschriebene Hörhilfegerät sowie das vorstehend beschriebene Mobilgerät. Das Hörsystem ist - vorzugsweise mittels einer auf dem Mobilgerät installierten Softwareapplikation, die bei Ausführung eine entsprechende Steuerung bereitstellt - dazu eingerichtet, das vorstehend beschriebene Verfahren vorzugsweise selbsttätig, optional in Interaktion mit dem Hörgeräteträger durchzuführen.

Dem Hörsystem kommen somit die gleichen Vorteile zu wie dem vorstehend beschriebenen Verfahren.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend wird ein Ausführungsbeispiel der Erfindung anhand einer Zeichnung näher erläutert. Darin zeigen:
- Fig. 1: in einer schematischen Übersicht ein Hörsystem und einen Sprecher, und
- Fig. 2: in einem schematischen Ablaufdiagramm ein von dem Hörsystem durchge-führtes Verfahren.

Einander entsprechende Teile sind in allen Figuren stets mit gleichen Bezugszeichen versehen.

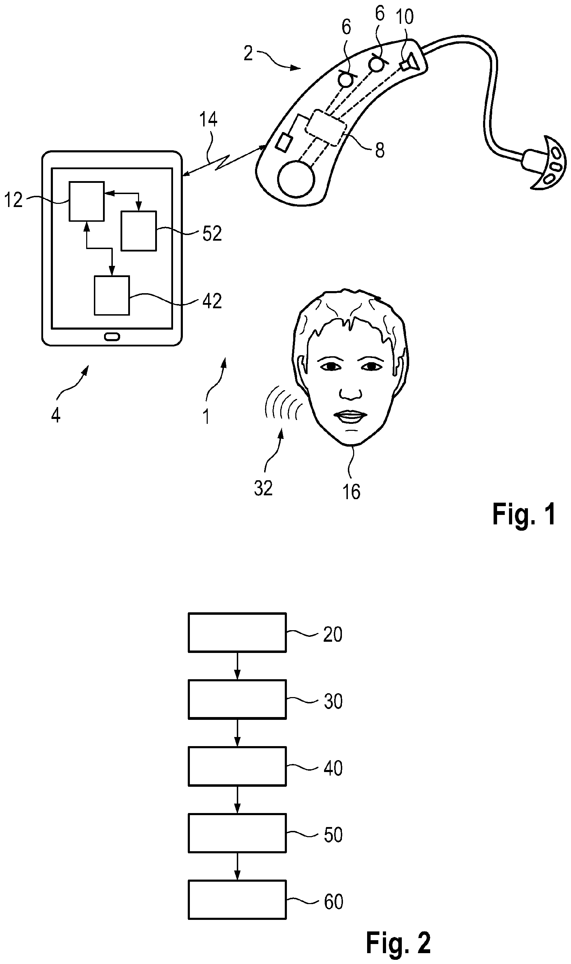

In Fig. 1 ist schematisch ein Hörsystem 1 dargestellt. Das Hörsystem 1 umfasst ein Hörhilfegerät, konkret ein hinter dem Ohr zu tragendes Hörhilfegerät (kurz als "Hörgerät 2" bezeichnet), sowie ein Mobilgerät, vorliegend beispielhaft durch ein Smartphone 4 gebildet.

Das Hörgerät 2 umfasst zwei Mikrofone 6 zum Erfassen von Schall aus der Umgebung, einen Signalprozessor 8, der zum frequenzabhängigen Filtern und Verstärken von seitens der Mikrofone 6 zugeführten Tonsignalen (oder: Mikrofonsignalen) eingerichtet ist, sowie einen Lautsprecher 10. Mittels des Lautsprechers 10 werden im bestimmungsgemäßen Betrieb des Hörgeräts 2 die im Signalprozessor 8 bearbeiteten Tonsignale akustisch ausgegeben.

Das Smartphone 4 weist eine Softwareapplikation auf, die aufgrund ihrer Installation auf dem Smartphone 4 eine Steuerung für das Hörsystem 1 bildet und deshalb im Folgenden als "Steuerapp 12" bezeichnet wird. Mittels der Steuerapp 12 wird ein im Folgenden näher beschriebenes Verfahren durchgeführt. Hierfür ist das Smartphone 4 dazu eingerichtet, mit dem Hörgerät 2 im bestimmungsgemäßen Betrieb eine bidirektionale, drahtlose Kommunikationsverbindung 14 (bspw. mittels des Bluetooth-Standards) aufzubauen. Im Rahmen des vorstehend genannten Verfahrens ist das Hörsystem 1 dazu eingerichtet, einen spezifischen Sprecher 16 anhand akustischer Analyse zu erkennen.

Wie in Fig. 2 dargestellt, wird hierzu in einem ersten Verfahrensschritt 20 mittels der Mikrofone 6 des Hörgeräts 2 Schall aus der Umgebung des Hörgeräts 2 erfasst und dem Signalprozessor 8 in Form der elektrischen Tonsignale zugeführt.

In einem nachfolgenden Verfahrensschritt 30 wird in dem Signalprozessor 8 analysiert, ob in den Tonsignalen ein Sprachanteil 32 einer Person enthalten ist. Für den Fall, dass ein solcher Sprachanteil 32 enthalten ist, wird in einem weiteren Verfahrensschritt 40 überprüft, ob dieser Sprachanteil 32 ein bekanntes Stimmprofil enthält. Hierzu wird das für den Sprachanteil 32 ermittelte Stimmprofil mit, bekannten Personen des Hörgeräteträgers, der das Hörgerät 2 trägt und dem das Smartphone 4 gehört, zugeordneten Stimmprofilen verglichen. Dazu greift die Steuerapp 12 auf eine Kontaktdatenbank zu, die mittels einer auf dem Smartphone 4 installierten Adressbuchapp 42 verwaltet wird. In der Kontaktdatenbank sind gegebenenfalls bereits bekannte Stimmprofile spezifischen Kontakten (d. h. einzelnen Personen) des Hörgeräteträgers zugeordnet.

Für den Fall, dass das aktuell ermittelte Stimmprofil bekannt und auch einem Kontakt des Hörgeräteträgers zugeordnet ist, wertet die die Steuerapp 12 diesen Kontakt als den spezifischen Sprecher 16. In einem Verfahrensschritt 50 zeigt die Steuerapp 12 den Namen des Kontakts als aktuellen Sprecher 16 an, indem sie eine Displaysteuerung 52 des Smartphones 4 entsprechend ansteuert. Sofern für diesen Kontakt hinterlegt, wird auch ein Bild des Kontakts angezeigt. Zusätzlich wird angefragt, ob es sich bei diesem Kontakt tatsächlich um den aktuellen Sprecher 16 handelt.

Anderenfalls fragt die Steuerapp 12 an, welchem Kontakt das aktuell ermittelte, aber bisher unbekannte Stimmprofil zugeordnet werden kann.

Ist der spezifische Sprecher 16 bestätigt, holt die Steuerapp 12 in einem Verfahrensschritt 60 aus der Adressbuchapp 42 - oder bspw. von einer weiteren App - zusätzliche Informationen zu dem spezifischen Sprecher 16 ein. Konkret wird abgerufen, wie oft sich der Hörgeräteträger und der spezifische Sprecher 16 in den letzten 10 Tagen unterhalten haben. Diese Information wird dem Hörgeräteträger am Smartphone 4 angezeigt.

Für den Fall, dass aus der Adressbuchapp hervorgeht, dass der Hörgeräteträger (nur) eine Fremdsprache spricht, wird dem Hörgeräteträger angeboten, eine (beispielsweise maschinelle, simultane) Übersetzung bereitzustellen, bspw. übersetzten Text am Smartphone-Display anzuzeigen oder akustisch über den Lautsprecher 10 des Hörgeräts 2 auszugeben.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### Bezugszeichenliste

- 1: Hörsystem
- 2: Hörgerät
- 4: Smartphone
- 6: Mikrofon
- 8: Signalprozessor
- 10: Lautsprecher
- 12: Steuerapp
- 14: Kommunikationsverbindung
- 16: Sprecher
- 20: Verfahrensschritt
- 30: Verfahrensschritt
- 40: Verfahrensschritt
- 42: Adressbuchapp
- 50: Verfahrensschritt
- 52: Displaysteuerung
- 60: Verfahrensschritt

## Patentansprüche

1. Verfahren zum Betrieb eines ein Hörhilfegerät (2) sowie ein Mobilgerät (4) umfassenden Hörsystems (1), wobei verfahrensgemäß
- mittels wenigstens eines Mikrofons (6) des Hörhilfegeräts (2) Schallsignale erfasst und in zugeordnete elektrische Mikrofonsignale gewandelt werden,
- die Mikrofonsignale auf ein Vorhandensein von Sprachanteilen (32) überprüft werden,
- vorhandene Sprachanteile (32) mittels einer Stimmerkennung untersucht und ein dabei erkanntes Stimmprofil einem spezifischen Sprecher (16) zugeordnet werden, und
- mittels des Mobilgeräts (4) über eine Personeninformation hinausgehende Zusatzinformationen zu dem spezifischen Sprecher (16) eingeholt und einem Nutzer des Hörsystems (1) dargeboten werden, wobei überprüft wird, ob zu dem spezifischen Sprecher (16) eine Spracheninformation zu einer von diesem vornehmlich gesprochenen Fremdsprache vorliegt, und wobei dem Nutzer eine Übersetzung der von dem spezifischen Sprecher (16) gesprochenen Worte dargeboten wird, wenn eine entsprechende Spracheninformation dem spezifischen Sprecher (16) zugeordnet ist.

2. Verfahren nach Anspruch 1,
wobei in dem Mobilgerät (4) zu dem spezifischen Sprecher (16) eine Gesprächs-Historie über bereits erfolgte Gespräche geführt wird und dem Nutzer des Hörsystems (1) bei Erkennen des spezifischen Sprechers (16) als Zusatzinformation ein aktueller Stand der Gesprächs-Historie ausgegeben wird.

3. Verfahren nach Anspruch 1 oder 2,
wobei als Zusatzinformation eine Termininformation, die mit dem spezifischen Sprecher (16) verknüpft ist, ausgegeben wird.

4. Verfahren nach Anspruch 3,
wobei die Termininformation aus einer mittels des Mobilgeräts (4) verwalteten Datenbank abgerufen wird.

5. Verfahren nach einem der Ansprüche 1 bis 4,
wobei dem Nutzer bei erfolgloser Stimmerkennung eine Anfrage zur Zuweisung eines in den Sprachanteilen (32) enthaltenen unbekannten Stimmprofils zu einer spezifischen Person gestellt wird.

6. Verfahren nach einem der Ansprüche 1 bis 5,
wobei dem Nutzer bei erkanntem Stimmprofil eine Anfrage zur Bestätigung der spezifischen Person gestellt wird.

7. Verfahren nach einem der Ansprüche 1 bis 6,
wobei während einer Lernphase zu dem spezifischen Sprecher dessen Stimmprofil in unterschiedlichen akustischen Umgebungen erfasst wird.

8. Verfahren nach einem der Ansprüche 1 bis 7,
wobei im Hörhilfegerät (2) eine von dem spezifischen Sprecher (16) abhängige, insbesondere stimmprofilabhängige Signalverarbeitung aufgenommen wird.

9. Hörsystem (1) umfassend ein Hörhilfegerät (2) sowie ein Mobilgerät (4), eingerichtet, ein Verfahren nach einem der Ansprüche 1 bis 8 durchzuführen.

## Claims

1. Method for operating a hearing system (1) comprising a hearing aid (2) and a mobile device (4), wherein, according to the method,
- sound signals are captured by means of at least one microphone (6) of the hearing aid (2) and are converted into associated electrical microphone signals,
- the microphone signals are checked for the presence of speech components (32),
- speech components (32) which are present are analysed by means of voice recognition and a voice profile recognized in the process is assigned to a specific speaker (16), and
- additional information relating to the specific speaker (16) that goes beyond personal information is obtained by means of the mobile device (4) and is presented to a user of the hearing system (1), wherein a check is carried out in order to determine whether there is, for the specific speaker (16), speech information for a foreign language that is predominantly spoken by said speaker, and wherein a translation of the words spoken by the specific speaker (16) is presented to the user if corresponding speech information is assigned to the specific speaker (16) .

2. Method according to Claim 1,
wherein a conversation history for conversations which have already taken place is held in the mobile device (4) for the specific speaker (16) and a current version of the conversation history is output to the user of the hearing system (1) as additional information if the specific speaker (16) is recognized.

3. Method according to Claim 1 or 2,
wherein appointment information linked to the specific speaker (16) is output as additional information.

4. Method according to Claim 3,
wherein the appointment information is retrieved from a database managed by means of the mobile device (4) .

5. Method according to one of Claims 1 to 4,
wherein, in the event of unsuccessful voice recognition, a request to assign an unknown voice profile contained in the speech components (32) to a specific person is sent to the user.

6. Method according to one of Claims 1 to 5,
wherein, in the event of a recognized voice profile, a request to confirm the specific person is sent to the user.

7. Method according to one of Claims 1 to 6,
wherein, during a learning phase for the specific speaker, the voice profile of said speaker is captured in different acoustic environments.

8. Method according to one of Claims 1 to 7,
wherein signal processing which is dependent on the specific speaker (16), in particular is dependent on the voice profile, is started in the hearing aid (2) .

9. Hearing system (1) comprising a hearing aid (2) and a mobile device (4), configured to carry out a method according to one of Claims 1 to 8.

## Revendications

1. Procédé de fonctionnement d'un système auditif (1) comprenant un appareil de prothèse auditive (2) ainsi qu'un appareil mobile (4), selon le procédé
- des signaux acoustiques étant enregistrés au moyen d'au moins un microphone (6) de l'appareil de prothèse auditive (2) et convertis en signaux de microphone électriques associés,
- les signaux de microphone étant vérifiés quant à la présence de composantes vocales (32),
- des composantes vocales existantes (32) étant analysées au moyen d'une reconnaissance vocale et un profil de voix reconnu étant associé à un locuteur spécifique (16), et
- au moyen de l'appareil mobile (4), des informations supplémentaires sur le locuteur spécifique (16), qui vont au-delà d'une information personnelle, étant obtenues et présentées à un utilisateur du système auditif (1), une vérification étant effectuée pour savoir si le locuteur spécifique (16) est lié à une information linguistique sur une langue étrangère parlée particulièrement par celui-ci, et une traduction des mots prononcés par le locuteur spécifique (16) étant présentée à l'utilisateur lorsqu'une information linguistique correspondante est associée au locuteur spécifique (16) .

2. Procédé selon la revendication 1,
un historique de conversations, concernant des conversations qui ont déjà eu lieu, étant conservé dans l'appareil mobile (4) pour le locuteur spécifique (16) et un état actuel de l'historique de conversations étant délivré à l'utilisateur du système auditif (1) comme information supplémentaire lorsque le locuteur spécifique (16) est reconnu.

3. Procédé selon la revendication 1 ou 2,
une information de rendez-vous, liée au locuteur spécifique (16), étant délivrée comme information supplémentaire.

4. Procédé selon la revendication 3,
l'information de rendez-vous étant extraite d'une base de données gérée au moyen de l'appareil mobile (4).

5. Procédé selon l'une des revendications 1 à 4,
en cas d'échec de la reconnaissance vocale, l'utilisateur étant invité à associer un profil de voix inconnu, contenu dans les composantes vocales (32), à une personne spécifique.

6. Procédé selon l'une des revendications 1 à 5, l'utilisateur étant invité à confirmer la personne spécifique lorsque le profil de voix est reconnu.

7. Procédé selon l'une des revendications 1 à 6, pendant une phase d'apprentissage relative au locuteur spécifique, le profil de voix de celui-ci étant enregistré dans différents environnements acoustiques.

8. Procédé selon l'une des revendications 1 à 7,
un traitement de signal dépendant du locuteur spécifique (16), en particulier dépendant du profil de voix, étant enregistré dans l'appareil de prothèse auditive (2).

9. Système auditif (1) comprenant un appareil de prothèse auditive (2) et un appareil mobile (4) et conçu pour mettre en œuvre un procédé selon l'une des revendications 1 à 8.
